# EUROPEAN PATENT SPECIFICATION

(11) **EP 2 886 310 B1**
(45) Date of publication and mention of the grant of the patent: **22.08.2018**
(21) Application number: 13400040.5
(22) Date of filing: 19.12.2013
(51) Int. Cl.: B29C 70/44, B29C 70/48, B29B 11/16, B29C 65/00

(54) **Composite compound structural component and method of forming the same**
Strukturelle Verbundwerkstoffkomponente und Verfahren zu ihrer Herstellung
Composant structurel composite et son procédé de fabrication

(43) Date of publication of application: 24.06.2015
(73) Proprietor: AIRBUS HELICOPTERS DEUTSCHLAND GmbH, 86609 Donauwörth (DE)
(72) Inventor: Otto, Hans, D-86641 Rain AM Lech (DE); Schmid, Emanuel, D-86685 Huisheim (DE); Lindner, Harald, D-83627 Warngau (DE); Oefner, Walter, D-83624 Otterfing (DE)
(74) Representative: GPI & Associés

(56) References cited:
- WO-A1-2007/041782
- WO-A2-2008/120990
- FR-A1- 2 919 819
- US-A1- 2003 116 267

## Description

The invention relates to a composite compound structural component with the features of claim 1. The invention further relates to a method for producing a connecting element according to claim 9 and a method of producing a composite compound structural component with the features of claim 11.

The term "composite" refers to an assembly of plies of fiber material embedded in a resin matrix, e. g. carbon fiber reinforced plastics (CFRP).

Composite parts are made using direct processes, often referred as liquid moulding processes, in particular Resin Transfer Moulding (RTM). In such processes, resin and reinforcement are combined and cured in the same moulding operation. Therefore a dry textile as reinforcement, commonly termed the preform, is placed in a mould, and then infused with the resin. The term preform may refer to flat fiber reinforcement but more usually these preforms build up the final fiber geometry and structure and are most of the time made of two or more "sub"-preforms that are assembled to the final, three-dimensional shape with complex geometry.

Said (sub-)preforms are composed of assemblies of plies of fiber material, e. g. carbon fiber material. Said (sub-)preforms are folded to form e. g. a flange defining at least one inner angle. For the assembly of textile (sub)-preforms two main alternative methods have been developed in recent years, which are called hereafter textile preforming and binder - preforming. The first method applies highly automated, but adapted techniques from the clothing industry to the textile (sub)-preforms, for instance sewing, cutting and assembling of mainly flat textiles. For the second method "binder preforming", a polymeric binder or tackifier is used to assemble the textile (sub)-preforms. Binders are available in different forms, like in powder form deposed on the fibers mats during their manufacturing or in form of a fleece which is stacked between the fibers plies. By heating the binder is activated and becomes tacky so that the textile reinforcement may be placed and fix (by cooling down) to a shape close to its final shape.

In a subsequent curing step of the preform according to a RTM process (Resin Transfer Molding) an at least two-parts mould is closed by mechanical force, such as hydraulic press, nuts/bolts, heavy duty toggle clamps etc,. Thermosetting resin is injected directly into the preform in the mould and then cured in order to produce a construction element, ideally a three-dimensional, final, solid composite structure with complex geometry.

Composite parts used in aircrafts are very complex and often made of different construction elements that are joined together. Examples of elements are longitudinal profiles, like L-profiles or T-profiles. The use of such profiles is complex and can raise some problems. For example, the use of L-profiles can be linked with a risk of cracking of the part at the junction between the preforms due to use of tools with sharp edges during the manufacturing process, among others reasons. Optically, the results are not always satisfying. For these reasons, among others, the use of T-profiles has been preferred. But their production and use are complex, time-consuming and cost expensive. A problem of the preforming process is that the dry plies of the laminate, if they are bent, slide with respect to each other, thereby creating undesirable stepped edges of the flange of the construction element. These stepped edges are usually removed by a trimming operation performed after the curing of the construction element, to create edges cut perpendicularly to the faces of the flange. A further problem of the RTM process is the tooling cost and limitation: The RTM process relies on a mould/clamping structure being stiff enough to withstand the pressure of the injected resin without opening or distorting. The RTM process is problematic if large scale components are molded, with tooling sometimes becoming uneconomic, simply due to its mass and handling/clamping requirements. Moreover the development of these tools is often extremely time-consuming and costly and the costs are bound to multiply during the development phase of a construction element, if the geometry of the preforms has to be changed. A further problem related to the RTM tooling is the shape of these tools (for example very thin and sharp edges adapted to complex profiles, like L-profiles), which make them very sensitive to handle and conduct to an expensive need of replacement.

The document US 2010139847 A1 discloses a method for producing a structural component, particularly in the aerospace sector. An unhardened prepreg fabric is formed from a composite fiber material, hardenable at a first hardening temperature, into a predetermined shape. The unhardened prepreg fabric is then connected to at least one hardening part of a composite fiber material partially hardened at a second hardening temperature for holding the unhardened prepreg fabric in the predetermined shape, wherein the second hardening temperature is lower than the first hardening temperature. In a further method step the unhardened prepreg fabric connected to the at least one holding part is hardened at the first hardening temperature to form the structural component.

The document DE 10 2007 042 287 A1 discloses a method for producing a fiber composite component. Said method comprises the following steps: a) several planar layers of fiber material are joined together, a fleece material being inserted into at least one interstice bordered by at least one curved surface section of one of the layers of fiber material; b) the layers of fiber material and the fleece material are infiltrated with a matrix material; and c) the joined and infiltrated layers of fiber material including the fleece material are cured.

The document EP 2 543 894 A1 discloses a method for producing a connection element for tubular elements, comprising the following operations: bending a shaped laminar body along three converging bending lines to define corresponding concave areas; making in the shaped laminar body two cuts mainly developed according to corresponding trajectories intersecting each corresponding bending line, so as to laterally delimiting corresponding strips of material; lifting the strips towards the inside of the corresponding concave areas, so as to define corresponding guide channels developed parallel to the bending lines. The shaped laminar body is provided with two edge portions with corresponding shaped edges, one of which comprises a projection suited to be fitted in a corresponding recess belonging to the other shaped edge.

The document WO 2012/127038 A2 discloses a method for producing a structural component, which has at least two component parts connected to each other by means of a thermoplastic plastic material and can be used in particular in the field of air travel or space travel. In a first method step, a first component part and a second component part are provided and are arranged to form an arrangement. In a further step, the arrangement is creep-shaped at a temperature that is selected in such a way that the thermoplastic plastic material at least partially melts during the creep-shaping in order to connect the first component part and the second component part.

The document EP 2 274 158 B1 discloses a forming tool with a predefined mold portion for producing a reinforced fiber composite component for aviation and aerospace. A forming/support element is molded by means of the mold portion of the forming tool. A semi-finished fiber product is then deposited at least in portions on the shaped forming/support element. The deposited semi-finished fiber product is deformed by means of the forming/support element to form at least one reinforcing portion. The forming/support element is then removed from the forming tool together with the reinforcing section formed on this element, followed by defined positioning of the reinforcing section thus formed with respect to an associated fiber composite component portion by supporting with the forming/ support element. The reinforcing portion is cured to form the reinforced fiber composite component. A forming device is provided with a predefined mold portion which holds a forming/support element such that it can be removed.

The document EP 2 522 495 A1 discloses a structural member composed of assembled plies of fiber material embedded in a resin matrix and comprising at least one laminated part formed by a plurality of these plies arranged in a stacking relationship, wherein the laminated part of the structural member is folded in such a way as to form a flange defining an inner angle with respect to a base portion of the laminated part. The edge of the flange forms a sloped surface.

Document FR 2 919 819 A1 discloses a method for making a complex structure of composite material in which two or more elementary composite pieces are joined by a composite connecting piece that allows different angular offsets between the elementary pieces. The method can be adapted depending on the efforts and rigidities the resulting composite complex structure will have to bare.

WO 2008 120990 A2 discloses a connecting element for connecting composite parts comprising a gusset filler made of thermoplastic material. It is an object of the invention to provide an improved composite compound structural component with connecting elements allowing coverage of various connections between preforms while supporting said preforms. It is a further object of the invention to provide a method for production of such improved composite compound structural components with connecting elements.

Said various connections are defined as connections in at least two different planes, in general more than three planes.

The solution is provided with a composite compound structural component with the features of claim 1 of the invention. A further solution is provided with a method for production of such composite compound structural components with the features of claim 11. Furthermore a method of producing a connecting element is provided in claim 9. According to a preferred embodiment of the invention a composite compound structural component is preferably a semi-finished element for subsequent RTM-processing to a construction element. Said construction element is destined for application particularly in the aerospace sector.

Said component comprises at least two separate subpreforms. Each separate subpreform is at least essentially two-dimensional and assembled of plies of fiber material, particularly of plies of carbon fibers.

Said component further comprises at least one connecting element allowing coverage of various connections between said separate subpreforms while supporting said subpreforms.

The at least one connecting element, made of plies of fibers, is preferably binder activated, cut to final dimension and connects said separate subpreforms to a semi-finished element sufficiently stable for maintaining a shape for further processing such as RTM-processing.

According to an advantage of the inventive composite compound structural component, the at least one connecting element allows enhanced connection between the at least two separate subpreforms to build said stable component at reduced costs and operating expenses. The at least one connecting element covers with its at least essentially two dimensional extension the at least one junction of the at least two separate subpreforms allowing the use of a simple RTM-tool and providing reduced susceptibility to cracking of the resulting construction element.

According to a further advantage of the inventive composite compound structural component, the at least one connecting element transfers loads between the at least two separate subpreforms, or the at least one connecting element is the only link between the at least two separate subpreforms. With the at least one connecting element being the only link between the at least two separate subpreforms, complex L-profiles or T-profiles can be avoided thus allowing more simple and cost efficient inventive composite compound structural components and further allowing further simplified RTM-toolings for the inventive composite compound structural components.

According to a still further advantage of the inventive composite compound structural component, the at least one connecting element allows simple rearrangements to other geometries, such as length, number of connecting elements between subpreforms, number of connected subpreforms...

According to another advantage of the inventive composite compound structural component the connecting element is made of stacked plies of fibers and binders allowing simple handling of said connecting element after activation of said binder by heating under vacuum. Said polymer binder provided with said plies is melted through said activation and said melted polymer binder renders the fibers of the tissue tacky and fixes them in positions once occupied once cooled down.

According to another advantage of the inventive composite compound structural component the activated fibers used for the manufacturing of the at least one connecting element are cut to final dimension and are suitable for direct placement to the subpreform without deformation subsequent to post placement cutting and without unravel.

According to a preferred embodiment of the invention at least two separate subpreforms are arranged in planes angular offset to each other to a three dimensional structure, preferably with respective angular offsets comprised between 70° and 110°. The at least one connecting element is curved to adapt to the respective plane for integral connection of each of the at least two separate subpreforms to a three dimensional stable semi-finished element.

According to a preferred embodiment of the invention, at least three separate subpreforms are arranged in planes angular offset to each other to a three dimensional structure, preferably with respective angular offsets comprised between 70° and 110°C. The at least one connecting element is three dimensional and spatial curved to adapt to the respective plane of each of the at least three separate subpreforms for integral connection of each of the at least three separate subpreforms to a three dimensional stable semi-finished element.

According to the invention, the at least one connecting element is provided with at least one gusset filler arranged at the curved part of the at least one connecting element. The at least one gusset filler is adapted and projects to the respective sides of the at least one angle defined by the at least two angular offset separate subpreforms and allows further coverage according to an advantage of the inventive composite compound structural component - supplemental to the coverage by means of the at least one connecting element with its at least essentially two dimensional extension - at the at least one intersection of the at least two separate subpreforms.

According to the invention, the at least one connecting element is provided with at least one support layer for support of the at least one gusset filler, said at least one support layer being partly attached to the at least one connecting element and partly attached to the at least one gusset filler.

The support layer allows according to an advantage of the inventive composite compound structural component further coverage - supplemental to the coverage by means of the at least one connecting element with its at least essentially two dimensional extension - at the at least one connection of the at least two separate subpreforms.

According to a further preferred embodiment of the invention, the plies of the subpreforms and/or the connecting elements are arranged so as to compensate for the sliding effect, thereby providing a substantially perpendicular edge at the end of a bending phase, without the need for trimming the subpreforms and/or the connecting elements after cylindrical or spatial bending.

According to a preferred embodiment of the invention, a method for producing a connecting element and more particularly a composite compound structural component with said at least one connecting element is provided with the following method steps:
- Providing optionally at least two at least essentially two-dimensional separate subpreforms each assembled of plies of fiber material;
- Providing at least one ply of fibers, preferably a ply of fibers with a polymer binder,
- If at least 2 plies are provided, stacking the plies of fibers with a polymer binder to at least one fiber semi-finished product,
- Melting the polymer binder under heat and vacuum for penetration between the plies and adhesion of the plies to at least one preactivated fiber semi-finished product;
- Cutting the preactivated fiber semi-finished products to final dimensions of at least one at least essentially two-dimensional connecting element;
- Stacking and positioning said semi-finished products cut to final dimensions, to a final two dimensional connecting element;
- Fixing said two dimensional connecting element;
- Fixing and Positioning of the at least one essentially two-dimensional connecting element on a thermoforming mould,
- Forming the at least one connecting element under temperature and vacuum to its final 3 dimensional profile,
- Connecting optionally the at least two separate subpreforms by means of the at least one connecting element; and
- Liquid Composite Moulding optionally the at least two separate subpreforms connected by the at least one connecting element in an injection mould.
An embodiment of the method is as follows:
1) All the preforms are prepared separately,
2) as well as the connecting elements.
3) All these elements and preforms are then placed in the RTM mould according to the final shape of the component to be manufactured.
4) Once the elements and preforms are placed, the mould is closed.
5) Then the component is cured (LCM, preferably RTM).

The inventive method allows economic and simple production of even large scale composite compound structural components as semi-finished elements for simple RTM-tools with simple cores and without grooves for cutting. As the separate subpreforms and the connecting elements are in the injection mould during injection of resin and hardener they are cured together for improved adhesion allowing the connecting elements to provide load carrying capability or exclusive link ability between the subpreforms. The inventive method is particularly suitable for the production of fairly complicated elements with only few production steps without great manual input. The inventive method further allows easy automation as the process is constantly repeated the same way.

According to a further preferred embodiment of the invention the at least one connecting element is formed to a curved profile with three dimensions and said at least one curved connecting element is connected to at least two separate subpreforms arranged in planes angular offset to each other, preferably with an angular offset of 90°, to a three dimensional structure of the composite compound structural component.

According to a further preferred embodiment of the invention at least one gusset filler is provided for the at least one three-dimensional connecting element, at least one support layer is further provided with the at least one three-dimensional connecting element of preactivated fiber semi-finished products and the at least one gusset filler is connected to the at least one support layer and to the at least one three-dimensional connecting element under temperature and pressure. The support layer holds the gusset filler in position and avoids removal of the gusset filler from the three-dimensional connecting element during handling, transport and mounting on the RTM-tool.

According to a further preferred embodiment of the invention the at least one three-dimensional curved connecting element is cut offset from its corners or set, and the cut off sections of the preactivated fiber semi-finished products are bonded for a form-stable three dimensional connecting element.

According to a further preferred embodiment of the invention the composite compound structural component comprising the at least one connecting element is formed as a stringer, a rib or a skin with at least one stringer or at least one rib for joining of essentially planar construction elements of aircraft structures.

A preferred embodiment of the invention is presented by means of the following description with reference to the attached drawings.
Fig. 1 shows a perspective view of part of a three-dimensional, final, solid composite aircraft structure made of composite compound structural components, according to the invention,
Fig. 2 shows a cross-sectional view of a connecting element,
Fig. 3 shows a cross-sectional view of a composite compound structural component at a junction between a connecting element and preforms according to the invention,
Fig. 4 shows spherical views of connecting elements,
Fig. 5 shows a cross-sectional view of a composite compound structural component at a further junction between further connecting elements and preforms according to the invention, and
Fig. 6 shows a cross-sectional view of a composite compound structural component at an other junction between further connecting elements and preforms according to the invention.

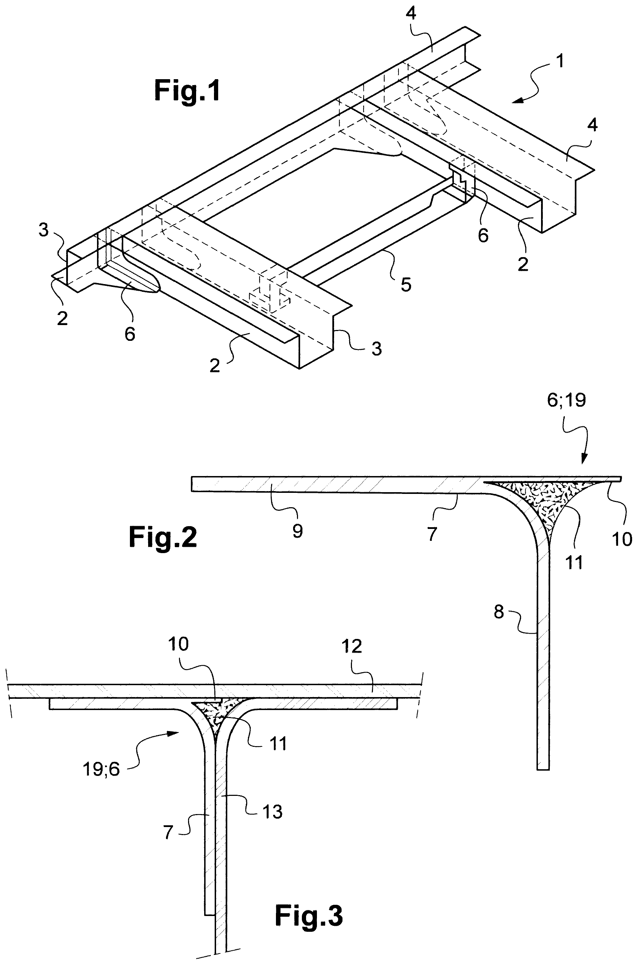

According to Fig. 1 a composite compound aircraft structure 1 comprises essentially planar U-elements 2 joint along their respective webs 3, upper flanges 4 and lower flanges 5 of subpreforms. The planar U-elements 2 enclose approximately 90° angles at their intersections or are approximately aligned relative to each other. The intersections are respectively reinforced with connecting elements 6 attached to the planar U-elements 2 defining composite compound structural components of the intersections. The connecting elements 6 of the approximately 90° intersections are three dimensional.

According to Fig. 2 corresponding features are referred to with the references of Fig. 1. The connecting element 6, 19 for an approximately 90° intersection comprises a curved main layer 7 enclosing an angle of approximately 90° between its lower and upper sides 8, 9. A support layer 10 is split off from the main layer 7 enclosing an angle of approximately 90° with the lower side 8 and being approximately aligned with the upper side 9 for holding a gusset filler 11 adapted to the curvature from the lower side 8 to the upper side 9 of the main layer 7 and to the support layer 10.

The main layer 7 comprises plies of fiber with a polymer binder. The fibers comprise carbon fibers. The gusset filler 11 is made e. g. of thermoplastic material, braided cords of CFRP, glass fiber reinforced plastics (GFRP). The gusset filler 11 is provided with polymer binder or with an adhesive for adhesion to the main layer 7 and the support layer 10. The polymer binder is a thermoplastic fleece, a powder type epoxy resin, etc..

The polymer binder is melted under temperature and vacuum for rendering the fibers tacky for adhesion and consequent fixed positions between each other to the fixed plies of an essentially at least two-dimensional preactivated fiber semi-finished product, subsequently cut to final dimension.

The essentially two-dimensional preactivated fiber semi-finished product, cut to final dimension, is fixed and positioned on a thermoforming mould (not shown) to form under temperature and vacuum the connecting element 6, 19 with a stable three-dimensional profile and stable having the meaning of fixed.

According to Fig. 3 corresponding features are referred to with the references of Fig. 1 to 2. A composite compound structural component as stable semi-finished element for subsequent processing is provided by the three-dimensional connecting element 6, 19 connected to an essentially two-dimensional preform 12 and to a separate curved preform 13 with the adhesive gusset filler 11 fitting into the opening provided by the main layer 7, the support layer 10, the essentially two-dimensional preform 12 and the separate curved preform 13.

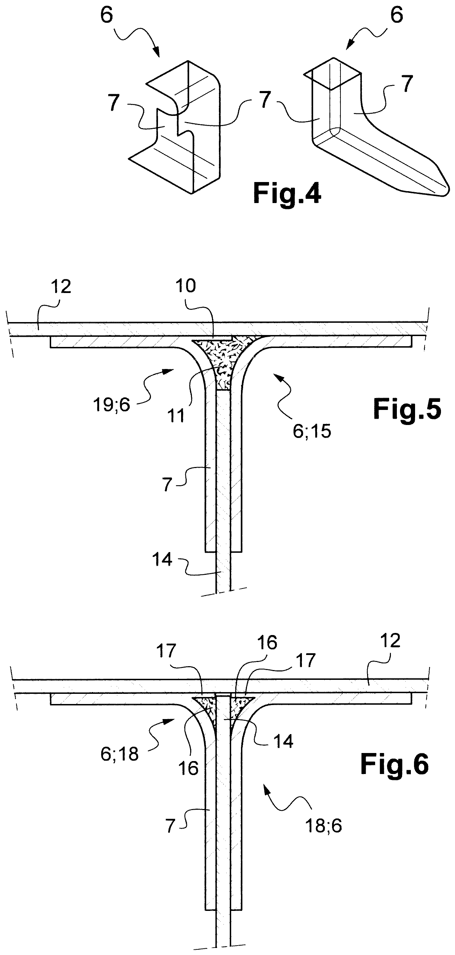

According to Fig. 4 corresponding features are referred to with the references of Fig. 1 to 3. Three-dimensional connecting elements 6 comprise curved main layers 7 for junction to an intersection of straight preforms of composite compound structural components (not shown) perpendicular to each other as applicable for intersecting U-type elements 2 (not shown).

According to Fig. 5 corresponding features are referred to with the references of Fig. 1 to 4. The three-dimensional connecting element 6, 19 is connected to the essentially two-dimensional subpreform 12 and to a separate essentially two-dimensional subpreform 14. Symmetrical with regard to the separate essentially two-dimensional subpreform 14 a further three-dimensional connecting element 6, 15 is connected to the essentially two-dimensional subpreform 12 and to the separate essentially two-dimensional subpreform 14. The adhesive gusset filler 11 attached to the three-dimensional connecting element 6, 19 is fitting into the opening left by the main layer 7, the support layer 10, the essentially two-dimensional subpreform 12, the separate essentially two-dimensional subpreform 14 and the further three-dimensional connecting element 15.

According to Fig. 6 corresponding features are referred to with the references of Fig. 1 to 5. The three-dimensional connecting element 6, 18 is connected to the essentially two-dimensional subpreform 12 and to the separate essentially two-dimensional subpreform 14. Symmetrical with regard to the separate essentially two-dimensional subpreform 14 another three-dimensional connecting element 6, 18 with a shortened support layer 17 is connected to the essentially two-dimensional subpreform 12 and to the separate essentially two-dimensional subpreform 14. A reduced gusset filler 16 attached to the three-dimensional connecting element 6, 18 is fitting into the opening left by the main layer 7 of the other three-dimensional connecting element 6, 18, the shortened support layer 17, the essentially two-dimensional subpreform 12 and the separate essentially two-dimensional subpreform 14. Still another three-dimensional connecting element 6, 18 is provided with a further reduced gusset filler 16 fitting into the opening left by a further shortened support layer 17 of the still another three-dimensional connecting element 6, 18, the essentially two-dimensional subpreform 12 and the separate essentially two-dimensional subpreform 14.

### Reference List

- 1: composite compound aircraft structure
- 2: double T-elements
- 3: webs
- 4: upper flanges
- 5: lower flanges
- 6: three-dimensional connecting elements
- 7: main layer
- 8: lower side
- 9: upper side
- 10: support layer
- 11: gusset filler
- 12: two-dimensional subpreform
- 13: separate curved subpreform
- 14: separate essentially two-dimensional subpreform
- 15: further three-dimensional connecting element
- 16: reduced gusset filler
- 17: further shortened support layer
- 18: other three-dimensional connecting element
- 19: three-dimensional connecting element

## Claims

1. A composite compound structural component (1), particularly as semi-finished element, for application particularly in the aerospace sector, said component comprising :
- at least two separate subpreforms (12, 13, 14) each separate subpreform (12, 13, 14) being at least two-dimensional and assembled of plies of fiber material, and
- at least one connecting element (6, 15, 18, 19) made of plies of fibers connecting
said separate subpreforms (12, 13, 14) to a stable semi-finished element, each connecting element having a curved part, being at least essentially two-dimensional and allowing coverage of various connections between said separate subpreforms (12, 13, 14) while supporting said subpreforms (12, 13, 14),
wherein the at least one connecting element (6, 18, 19) is provided with at least one gusset filler (11, 16) arranged at the curved part of the at least one connecting element (6, 18, 19), said at least one gusset filler (11, 16) being adapted and projecting to the respective sides of any angle defined by said separate subpreforms (12, 13, 14), said separate subpreforms (12, 13, 14) being angular offset,
**characterized in that** the at least one connecting element (6, 18, 19) is provided with at least one support layer (10, 17) for support of the gusset filler (10, 16), said support layer (10, 17) being partly attached to the at least one connecting element (6, 18, 19) and partly attached to the at least one gusset filler (10, 16).

2. The component (1) according to claim 1, wherein said connecting element (6, 15, 18, 19) is made of activated fibers semi-finished products.

3. The component (1) according to claims 1 and 2, wherein said activated fibers are cut to final dimension.

4. The component (1) according to claim 1, wherein said separate subpreforms (12, 13, 14) are arranged in planes angular offset to each other to a three dimensional structure.

5. The component (1) according to claim 4, wherein said separate subpreforms (12, 13, 14) are arranged in planes with an angular offset comprised between 70° and 110° and said connecting element (6, 15, 18, 19) is curved to adapt to the respective plane of each of the separate subpreforms (12, 13, 14).

6. The component (1) according to claim 1, wherein at least three of said separate subpreforms (12, 13, 14) are provided, said separate subpreforms (12, 13, 14) being arranged in planes angular offset to each other to a three dimensional structure, and each connecting element (6, 15, 18) is three dimensional and spatial curved to adapt to the respective plane of each of the separate subpreforms (12, 13, 14).

7. The component (1) according to claim 1, wherein the plies of the separate subpreforms (12, 13, 14) and/or of the connecting elements (6, 15, 18, 19) are cut to final dimension so as to compensate for the sliding effect due to bending of the subpreforms (12, 13, 14) and/or of the connecting elements (6, 15, 18).

8. The component (1) according to claim 1, wherein the plies of the subpreforms (12, 13, 14) are carbon fibers.

9. A method for producing a connecting element for a composite compound structural component according to one or more of the preceding claims with the following method steps:
- Providing at least one ply of fibers, preferably at least one ply of fibers with a polymer binder,
- Melting the polymer binder under heat and vacuum for penetration between the plies and adhesion of the plies to at least one preactivated fiber semi-finished product;
- Cutting the preactivated fiber semi-finished products to final dimensions of at least one at least essentially two-dimensional connecting element;
- Stacking and positioning said semi-finished products cut to final dimensions, to a final, at least two dimensional preactivated fiber semi-finished product,
- Fixing said at least one essentially at least two dimensional preactivated fiber semi-finished product,
- Fixing and Positioning of the at least one essentially two-dimensional preactivated fiber semi-finished product on a thermoforming mould, and
Forming the at least one essentially two-dimensional preactivated fiber semi-finished product under temperature and vacuum to a connecting element (6, 15, 18, 19) and further comprising the steps of:
- Providing at least one gusset filler (10, 16) for the at least one connecting element (6, 18, 19),
- Providing at least one support layer (10, 17) with the at least one connecting element (6, 18, 19),
Connecting the at least one gusset filler (10, 16) to the at least one support layer (10, 17) and to the at least one connecting element (6, 15, 18, 19) under temperature and pressure.

10. The method according to claim 9, further comprising stacking at least two plies of fibers with a polymer binder to at least one fiber semi-finished product.

11. The method for producing a composite compound structural component with at least one connecting element produced according to the method of claim 9, **characterized by**
- Providing at least two separate subpreforms (12, 13, 14) each at least two-dimensional and assembled of plies of fiber material to the composite compound structural component as semi-finished element;
- Providing at least one connecting element (6, 15, 18, 19) produced according to the method of claim 9 to the composite compound structural component as semi-finished element;
- Putting said at least two separate subpreforms (12, 13, 14) and said at least one connecting element (6, 15, 18, 19) in the injection mould in order to build the final geometry of the composite compound structural component as semi-finished element ; and
- Liquid Composite Moulding the at least two separate subpreforms (12, 13, 14) connected by the at least one connecting element (6, 15, 18, 19) in the injection mould to make a composite compound structural component (1).

12. The method according to claim 11, **characterized by**
- Forming the composite compound structural component (1) as a stringer, a rib or a skin with at least one stringer or at least one rib.

## Patentansprüche

1. Strukturelle Verbundwerkstoffkomponente (1), insbesondere als halbfertiges Element, zur Anwendung insbesondere im Luft- und Raumfahrtsektor, wobei die Komponente aufweist:
- mindestens zwei getrennte Untervorformen (12, 13, 14), wobei jede getrennte Untervorform (12, 13, 14) mindestens zweidimensional ist und zusammengesetzt ist aus Lagen aus Fasermaterial, und
- mindestens ein Verbindungselement (6, 15, 18, 19), hergestellt aus Lagen von Fasern, die die getrennten Untervorformen (12, 13, 14) zu einem stabilen halbfertigen Element verbinden, wobei jedes Verbindungselement einen gekrümmten Teil aufweist, der mindestens im Wesentlichen zweidimensional ist und das Abdecken verschiedener Verbindungen zwischen den getrennten Untervorformen (12, 13, 14) erlaubt, während es die Untervorformen (12, 13, 14) stützt, wobei das mindestens eine Verbindungselement (6, 18, 19) mit mindestens einem Verstärkungsfüllmaterial (11, 16) versehen ist, das an dem gekrümmten Teil des mindestens einen Verbindungselements (6, 18, 19) angeordnet ist, wobei das mindestens eine Verstärkungsfüllmaterial (11, 16) angepasst ist und zu den jeweiligen Seiten eines jeden Winkels ragt, der durch die getrennten Untervorformen (12, 13, 14) definiert wird, wobei die getrennten Untervorformen (12, 13, 14) winkelmäßig versetzt sind,
**dadurch gekennzeichnet, dass** das mindestens eine Verbindungselement (6, 18, 19) mit mindestens einer Tragschicht (10, 17) zum Tragen des Verstärkungsfüllmaterials (10, 16) versehen ist, wobei die Tragschicht (10, 17) teilweise an dem mindestens einen Verbindungselement (6, 18, 19) und teilweise an dem mindestens einen Verstärkungsfüllmaterial (10, 16) befestigt ist.

2. Komponente (1) nach Anspruch 1, wobei das Verbindungselement (6, 15, 18, 19) aus halbfertigen Produkten aus aktivierten Fasern hergestellt ist.

3. Komponente (1) nach Anspruch 1 und 2, wobei die aktivierten Fasern auf ihre Enddimensionen zugeschnitten sind.

4. Komponente (1) nach Anspruch 1, wobei die getrennten Untervorformen (12, 13, 14) in Ebenen angeordnet sind, die winkelmäßig zueinander zu einer dreidimensionalen Struktur versetzt angeordnet sind.

5. Komponente (1) nach Anspruch 4, wobei die getrennten Untervorformen (12, 13, 14) in Ebenen mit einem Winkelversatz zwischen 70° und 110° angeordnet sind und das Verbindungselement (6, 15, 18, 19) gekrümmt ist, um sich an die jeweilige Ebene jeder der getrennten Untervorformen (12, 13, 14) anzupassen.

6. Komponente (1) nach Anspruch 1, wobei mindestens drei der getrennten Untervorformen (12, 13, 14) vorgesehen sind, wobei die getrennten Untervorformen (12, 13, 14) in zueinander winkelversetzten Ebenen zu einer dreidimensionalen Struktur angeordnet sind und jedes Verbindungselement (6, 15, 18) dreidimensional und räumlich gekrümmt ist, um sich an die jeweilige Ebene jeder der getrennten Untervorformen (12, 13, 14) anzupassen.

7. Komponente (1) nach Anspruch 1, wobei die Lagen der getrennten Untervorformen (12, 13, 14) und/oder der Verbindungselemente (6, 15, 18, 19) auf ihre Enddimension zugeschnitten sind, um den Gleiteffekt aufgrund des Biegens der Untervorformen (12, 13, 14) und/oder der Verbindungselemente (6, 15, 18) zu kompensieren.

8. Komponente (1) nach Anspruch 1, wobei die Lagen der Untervorformen (12, 13, 14) aus Carbon-Fasern bestehen.

9. Verfahren zur Herstellung eines Verbindungselements für eine strukturelle Verbundwerkstoffkomponente nach einem oder mehreren der vorstehenden Ansprüche mit folgenden Verfahrensschritten:
- Bereitstellen mindestens einer Lage von Fasern, vorzugsweise mindestens einer Lage von Fasern mit einem Polymer-Binder,
- Schmelzen des Polymer-Binders unter Wärmeeinwirkung und Vakuum, damit dieser zwischen die Lagen eindringt, und Verkleben der Lagen zu mindestens einem halbfertigen Produkt aus voraktivierten Fasern,
- Zuschneiden der halbfertigen Produkte aus voraktivierten Fasern auf ihre Enddimensionen des mindestens einen mindestens im Wesentlichen zweidimensionalen Verbindungselemen ts,
- Stapeln und Positionieren der halbfertigen Produkte, welche auf ihre Enddimensionen zugeschnitten sind, um ein endgültiges, mindestens zweidimensionales halbfertiges Produkt aus voraktivierten Fasern zu erhalten,
- Fixieren des mindestens einen im Wesentlichen zweidimensionalen halbfertigen Produkts aus voraktivierten Fasern,
- Fixieren und Positionieren des mindestens einen im Wesentlichen zweidimensionalen Halbfertigprodukts aus voraktivierten Fasern in einer Warmverformungsform, und
- Formen des mindestens einen im Wesentlichen zweidimensionalen halbfertigen Produkts aus voraktivierten Fasern unter Wärmeeinwirkung und im Vakuum zu einem Verbindungselement (6, 15, 18, 19), und wobei das Verfahren ferner die Schritte aufweist:
- Bereitstellen mindestens eines Verstärkungsfüllmaterials (10, 16) für das mindestens eine Verbindungselement (6, 18, 19),
- Bereitstellen mindestens einer Trägerschicht (10, 17) mit dem mindestens einen Verbindungselement (6, 18, 19),
- Verbinden des mindestens einen Verstärkungsfüllmaterials (10, 16) mit der mindestens einen Trägerschicht (10, 17) und mit dem mindestens einen Verbindungselement (6, 15, 18, 19) unter Wärmeeinwirkung und Druck.

10. Verfahren nach Anspruch 9, welches ferner folgende Schritte aufweist:
- Stapeln von mindestens zwei Lagen von Fasern mit einem Polymer-Binder zu dem mindestens einem halbfertigen Faserprodukt.

11. Verfahren zur Herstellung einer strukturellen Verbundwerkstoffkomponente mit mindestens einem Verbindungselement, welches nach dem Verfahren gemäß Anspruch 9 hergestellt wurde, **gekennzeichnet durch**:
- Bereitstellen von mindestens zwei getrennten Untervorformen (12, 13, 14), von denen jede mindestens zweidimensional ist und aus Lagen aus Fasermaterial zu der strukturellen Verbundwerkstoffkomponente als halbfertigem Element zusammengesetzt ist,
- Bereitstellen mindestens eines Verbindungselements (6, 15, 18, 19), welches nach dem Verfahren gemäß Anspruch 9 zu der strukturellen Verbundwerkstoffkomponente als halbfertigem Element hergestellt wurde,
- Einlegen der mindestens zwei getrennten Untervorformen (12, 13, 14) und des mindestens einen Verbindungselements (6, 15, 18, 19) in die Spritzgussform, um die endgültige Geometrie der strukturellen Verbundwerkstoffkomponente als halbfertigem Element herzustellen und
- Flüssigkeitsverbundmaterial-Spritzgießen der mindestens zwei getrennten Untervorformen (12, 13, 14), die durch das mindestens eine Verbindungselement (6, 15, 18, 19) in der Spritzgussform verbunden sind, um eine strukturelle Verbundwerkstoffkomponenten (1) herzustellen.

12. Verfahren nach Anspruch 11,
**gekennzeichnet durch**
- Formen der strukturellen Verbundwerkstoffkomponente (1) als einen Längsträger, eine Rippe oder eine Verkleidung mit mindestens einem Längsträger oder mindestens einer Rippe.

## Revendications

1. Composant structurel en matériau composite (1), en particulier en tant qu'élément semi-fini, pour une application en particulier dans le secteur aéronautique, ledit composant comprenant :
- au moins deux sous-éléments préformés distincts (12, 13, 14) chaque sous-élément préformé distinct (12, 13, 14) étant au moins un assemblage bidimensionnel de nappes de matériau fibreux, et
- au moins un élément de raccordement (6, 15, 18, 19) fait de nappes de fibres reliant lesdits sous-éléments préformés distincts (12, 13, 14) à un élément semi-fini stable, chaque élément de raccordement ayant une partie courbe, qui est au moins essentiellement bidimensionnel et qui permet de recouvrir divers raccordements entre lesdits sous-éléments préformés distincts (12, 13, 14) tout en soutenant lesdits sous-éléments préformés (12, 13, 14),
dans lequel le au moins un élément de raccordement (6, 18, 19) est pourvu d'au moins un gousset de remplissage (11, 16) agencé à la partie courbe du au moins un élément de raccordement (6, 18, 19), ledit au moins un gousset de remplissage (11, 16) étant adapté à et épousant les côtés respectifs d'un quelconque angle défini par lesdits sous-éléments préformés distincts (12, 13, 14), lesdits sous-éléments préformés distincts (12, 13, 14) présentant un décalage angulaire,
**caractérisé en ce que** le au moins un élément de raccordement (6, 18, 19) est pourvu d'au moins une couche de support (10, 17) pour soutenir le gousset de remplissage (10, 16), ladite couche de support (10, 17) étant partiellement fixée à au moins un élément de raccordement (6, 18, 19) et partiellement fixée à au moins un gousset de remplissage (10, 16).

2. Composant (1) selon la revendication 1, dans lequel ledit élément de raccordement (6, 15, 18, 19) est fait de produits semi-finis en fibres activées.

3. Composant (1) selon les revendications 1 et 2, dans lequel lesdites fibres activées sont découpées à la dimension finale.

4. Composant (1) selon la revendication 1, dans lequel lesdits sous-éléments préformés distincts (12, 13, 14) sont agencés selon différents plans présentant un décalage angulaire les uns par rapport aux autres sur une structure tridimensionnelle.

5. Composant (1) selon la revendication 4, dans lequel lesdits sous-éléments préformés distincts (12, 13, 14) sont agencés selon différents plans présentant un décalage angulaire compris entre 70 et 110 degrés et ledit élément de raccordement (6, 15, 18, 19) est incurvé pour s'adapter au plan respectif de chaque sous-élément préformé distinct (12, 13, 14).

6. Composant (1) selon la revendication 1, dans lequel au moins trois desdits sous-éléments préformés distincts (12, 13, 14) sont prévus, lesdits sous-éléments préformés distincts (12, 13, 14) étant agencés selon des plans présentant un décalage angulaire les uns par rapport aux autres sur une structure tridimensionnelle, et chaque élément de raccordement (6, 15, 18) est tridimensionnel et courbe dans l'espace pour s'adapter au plan respectif de chaque sous-élément préformé distinct (12, 13, 14).

7. Composant (1) selon la revendication 1, dans lequel les nappes de sous-éléments préformés distincts (12, 13, 14) et/ou d'éléments de raccordement (6, 15, 18, 19) sont découpées à la dimension finale afin de compenser l'effet de glissement causé par courbe des sous-éléments préformés (12, 13, 14) et/ou des éléments de raccordement (6, 15, 18).

8. Composant (1) selon la revendication 1, dans lequel les nappes de sous-éléments préformés (12, 13, 14) sont en fibres de carbone.

9. Procédé de fabrication d'un élément de raccordement pour un composant structurel en matériau composite selon l'une ou plusieurs des revendications précédentes comportant les étapes suivantes de:
- fourniture d'au moins une nappe à fibres, de préférence au moins une nappe à fibres avec un liant polymère ;
- fusion du liant polymère à chaud et sous vide pour qu'il pénètre entre les nappes et que les nappes adhèrent pour obtenir au moins un produit semi-fini à fibres pré-activées ;
- découpe des produits semi-finis à fibres pré-activées aux dimensions finales du au moins un élément de raccordement au moins essentiellement bidimensionnel ;
- empilage et positionnement desdits produits semi-finis découpés aux dimensions finales jusqu'à obtenir au moins un produit semi-fini à fibres pré-activées bidimensionnel final,
- fixation dudit au moins un produit semi-fini à fibres pré-activées au moins essentiellement bidimensionnel,
- fixation et positionnement du au moins un produit semi-fini en fibres pré-activées au moins essentiellement bidimensionnel sur un moule de thermoformage, et
mise en forme du au moins un produit semi-fini à fibres pré-activées au moins essentiellement bidimensionnel à chaud et sous vide pour obtenir un élément de raccordement (6, 15, 18, 19), et qui comprend en outre les étapes suivantes de:
- fourniture d'au moins un gousset de remplissage (10, 16) pour le au moins un élément de raccordement (6, 18, 19),
- fourniture d'au moins une couche de support (10, 17) avec le au moins un élément de raccordement (6, 18, 19),
- raccordement d'au moins un gousset de remplissage (10, 16) à au moins une couche de support (10, 17) et à au moins un élément de raccordement (6, 15, 18, 19) à chaud et sous pression.

10. Procédé selon la revendication 9, comprenant en outre l'empilage d'au moins deux nappes de matériau à fibres à l'aide d'un liant polymère pour obtenir au moins un produit semi-fini à fibres.

11. Procédé de fabrication d'un composant structurel en matériau composite (1) avec au moins un élément de raccordement fabriqué selon le procédé de fabrication de la revendication 9, **caractérisé par** :
- la fourniture d'au moins deux sous-éléments préformés distincts (12, 13, 14) chacun étant au moins un assemblage bidimensionnel de nappes de matériau à fibres pour obtenir un composant structurel en matériau composite sous forme d'élément semi-fini ;
- la fourniture d'au moins un élément de raccordement (6, 15, 18, 19) fabriqué selon le procédé de fabrication de la revendication 9 pour obtenir un composant structurel en matériau composite sous forme d'élément semi-fini ;
- la mise en place dans le moule à injection desdits au moins deux sous-éléments préformés distincts (12, 13, 14) et dudit au moins un élément de raccordement (6, 15, 18, 19) afin de construire la géométrie finale du composant structurel en matériau composite sous forme d'élément semi-fini ; et
- le moulage composite imprégné des au moins deux sous-éléments préformés distincts (12, 13, 14) raccordés par au moins un élément de raccordement (6, 15, 18, 19) dans le moule à injection pour fabriquer un composant structurel en matériau composite (1).

12. Procédé de fabrication selon la revendication 11, **caractérisé par** :
- la mise en forme d'un composant structurel en matériau composite (1) comme une lisse, une nervure ou une peau avec au moins une lisse ou une nervure.
